# EUROPEAN PATENT SPECIFICATION

(11) **EP 3 519 104 B1**
(45) Date of publication and mention of the grant of the patent: **22.07.2020**
(21) Application number: 17723103.2
(22) Date of filing: 12.05.2017
(51) Int. Cl.: F16L 3/00, A01G 25/02, B05B 15/622

(54) **IRRIGATION DEVICE**
BEWÄSSERUNGSEINRICHTUNG
DISPOSITIF D'IRRIGATION

(30) Priority: 29.09.2016 DE 102016011706
(43) Date of publication of application: 07.08.2019
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2017/061452
(87) International publication number: WO 2018/059747

(56) References cited:
- WO-A1-2010/043312
- US-A- 2 421 103
- US-A- 3 385 525
- US-A1- 2009 230 206
- US-A1- 2015 250 110

## Description

The present invention relates to a clamping nut and an irrigation device comprising such clamping nut.

A usual irrigation device for garden irrigation is either a handheld device with a traditional spraying means, for example, a nozzle or a spray gun, or it is a stationary device, which is to be positioned on a garden surface, for example, the lawn. The latter, usually is facilitated either by simply placing a tripod or rack of the device on the ground, e.g. in case of a usually known segment sprinkler, or by penetrating particularly loose surfaces, e.g. soil or grass area, with a spike of the device, e.g. in case of a usually known full-circle sprinkler. Additionally, stationary sprinkling devices, which are submersible into the ground, are also known. All systems usually are arranged at the end of a hose, which supports the irrigation device with water to be sprayed. For mounting or exchanging different types of spraying devices, hose connectors are usually applied at the end of the hose. Accordingly, the handheld device can be easily exchanged by a stationary device, and vice versa.

However, if a user is interrupted when irrigating a garden surface with a handheld device, he usually has to interrupt the irrigation or has to exchange the irrigation device to a stationary device. Particularly, when irrigation of large surfaces, particularly garden surfaces, e.g. flower beds, hedges, trees, or the like, is envisaged, it is desired that a handheld device, e.g. a spray gun, can also be positioned on the ground to water over a longer period this area or to continue irrigation without having to be present.

The document US 2,421,103 describes an attachment for a hose, comprising a common type of nozzle. The attachment is jointed, so that the two relatively movable parts thereof may be positioned at any desired angle. Particularly, the device comprises a stake, which is mountable on the attachment, and with which the attachment can be positioned on the ground. However, the disclosed device consists of a multitude of parts and is prone to wear and tear.

In contrast to this pivotable hose connector which body portion is shaped as to cooperate with a spike removably attached to it US 2009/230206 A1 shows a hose connectors integrated with ground fixing means. Thereby the hose enters perpendicular to its ground positioning portion not to obstruct the same. In addition by keeping hose and ground positioning means separate their respective design will interfere with each other. Similar connectors arrangements are also known from US 3 385 525 A or US 2015/250110 A1**.**

It is an object of the present invention to provide an irrigation device, which can be used as both a handheld device and a stationary device that overcomes the above drawbacks.

It is a further object of the present invention to provide an irrigation device with improved functions, particularly with a more robust and a more simple design.

These and other problems are solved by the subject matter of the attached independent claims.

The above objects of the invention are achieved by a clamping nut according to claim 1 and an irrigation device according to claim 10.

Preferred embodiments may be taken from the dependent claims.

In a clamping nut for connecting a hose to a hose connector according to claim 1 such hose connector is for mounting a spraying device, particularly a handheld spraying device. Such spraying device is for spraying water for the purpose of irrigation, and may be selected from the group comprising spray gun, sprinkler, nozzle and circle sprinkler Preferably, the spraying device is a handheld spraying device, e.g. a handheld spray gun or handheld spraying nozzle. The clamping nut comprises a ground-positioning portion, which is configured to position the clamping nut, particularly the ground-positioning portion, on a surface, particularly a garden surface. In other words, the clamping nut according to the present invention, allows positioning a thereto-attached spraying device on the surface.

For this purpose, the clamping nut comprises the ground-positioning portion, preferably at its free end facing away the end to be connected to the hose connector and spraying device. The ground positioning portion may position the clamping nut on a surface of a support structure which itself is supported on the ground.

Particularly, such clamping nut allows for assembly of a respective irrigation device comprising such clamping nut, which can be used as both a handheld irrigation device and/or a stationary irrigation device, also being positioned to the ground.

A spraying device, which is to be mounted on the hose connector and which connects the hose with the spraying device for supporting water through the hose to the spraying device may thus be used as a handheld irrigation device, which if desired can be positioned on the ground, for example, if a user is interrupted when irrigating a garden surface with said handheld device. Instead of that the user has to interrupt the irrigation or has to exchange the irrigation device to a stationary device, particularly, when irrigation of large surfaces, particularly garden surfaces, e.g. flower beds, hedges, trees, or the like, is envisaged, the clamping nut according to the present invention and the irrigating device according to the present invention can be positioned on the ground. Advantageously, it is also possible to water this area over a longer period or to continue irrigation without having to be present.

Particularly, such clamping nut according to the present invention advantageously is directly attachable or directly attached to the hose connector. In an embodiment, the clamping nut according to the present invention comprises such hose connector, which is directly attached to the clamping nut.

Such configuration, where the clamping nut is directly attachable or directly attached to the hose connector allows for a relatively simple design of a respective irrigation device, which comprises such clamping nut, hose connector and spraying device, and which may be easily connected to a garden hose.

More particularly, such configuration, where the clamping nut is directly attachable or directly attached to the hose connector provides a clamping nut and a respective irrigation device comprising such clamping nut, which has advantageously improved functions, particularly has a relatively robust and a relatively simple design.

Furthermore, a clamping nut according to the present invention, which is designed to be directly attachable or directly attached to the hose connector, allows for connecting the hose via the hose connector with the spraying device. Depending on the type of spraying device, it is considered herein that in a state where the clamping nut is positioned on the surface, the spraying device, particularly the thus formed irrigation device according to the present invention, can be used as a stationary circular sprinkler. Particularly, where the spraying device is provided in a form of a bent or angled spray gun, the spraying device may rotate about its major axis due to the recoil of the escaping water. Preferably the rotation will be limited to its left and right site, thus it moves between these two borders.

It will be thus immediately understood by a person skilled in the art that the present invention is particularly useful to position a spraying device, particularly a handheld spraying device, e.g. a hand spray gun, on the ground. The present invention therefore allows to use the spraying device, and particularly the irrigation device of the present invention, for irrigation in a stationary state were the clamping nut of the present invention is positioned on the ground, and to use the spraying device, and particularly the irrigation device of the present invention, for irrigation in a mobile state were the clamping nut of the present invention is held in hand and thus not positioned on the ground.

A positioning on the ground as understood herein may comprise any positioning on the surface or detachable connection of the clamping nut, particularly of the ground-positioning portion, with the ground. Particularly, the clamping nut may comprise a ground positioning portion in the form of a frame, particularly a foldable frame, e.g. a tripod, or the ground positioning portion may be in the form of a tube and/or spike, e.g. an earth spike, for positioning the clamping nut, particularly the ground positioning portion in the soil.

It may be also immediately seen that compared to the usual configuration of a handheld spraying device, i.e. a hose connected to said spraying device via a hose connector and a clamping nut, the clamping nut and the irrigation device according to the present invention is cost neutral, as the usually applied clamping nut is replaceable by the clamping nut according to the present invention.

Thereby it is considered herein that the clamping nut, particularly the ground positioning portion, and the hose connector are formed as integral parts or separate parts of an irrigation device according to the present invention.

In an advantageous embodiment of the clamping nut according to the present invention the clamping nut has an elongated shape configured such that in a state where said hose is connected to said hose connector, and particularly, wherein the clamping nut is connected to said hose connector and the hose extends longitudinally, particularly substantially parallel, along at least a part of the elongated shaped clamping nut.

This is of particular advantage, as the clamping nut, particularly the ground-positioning portion of the clamping nut, according to the present invention may also be used as a handle extension and thus serves as a "mini-lance".

Moreover, such clamping nut having an elongated shape is of advantage due to its relatively compact design, particularly with regard to the radial dimensions. During a winding of the hose, e.g. onto a hose reel, the elongated shaped clamping nut and the irrigation device will be pulled over the surface, without the risk that the clamping nut or the irrigation device interlocks or tilts on the surface.

In a further advantageous embodiment of the clamping nut according to the present invention the ground positioning portion of the clamping nut, is in the form of a tube.

This is advantageous as a hose to be attached to the clamping nut, may be arranged to pass at least partially through the inside of said tube. This also serves as kink protection. Moreover, this is advantageous as the hose is protected by the tube surrounding - at least partially - the hose, and possibly the hose connector. Moreover, such tube-shaped clamping nut may have a round, particularly oval, circular or elliptical cross-section. The cross-section and/or the diameter of the tube may be adjusted and adapted to the geometry of the hose. Particularly, the tube and the diameter and/or cross-section thereof may be configured such, that the hose is guided straight in the hollow of the tube, thus preventing any curling or winding of the hose within the tube. A round, particularly an oval, cross-section of the tube may advantageously provide for a relatively high bending resistance and, moreover a relatively robust appearance of the clamping nut. The tube preferably has a flat and/or smooth inner surface, particularly free of grooves, edgings or the like. Particularly, the tube may be configured and designed such that the tube lies closely around the hose to be positioned therein.

In a further advantageous embodiment of the clamping nut according to the present invention the clamping nut, particularly the ground-positioning portion, more particularly the tube, has the form of a spike.

Such spike is advantageous as it facilitates the positioning on the surface, particularly of a loose surface, such as lawn or soil. The spike can be used to penetrate the surface and thus to position the clamping nut and the irrigation device on the surface.

Particularly, the end of the clamping nut facing away from the hose connector and/or spraying device has the form of a spike. It is immediately apparent that such spike-like geometry serves to position the clamping nut on loose surfaces, e.g. soil, grass area.

Thereby a spike geometry is particularly preferred of which the inner diameter is larger than the diameter of the hose to simplify the hose assembly.

In a further advantageous embodiment of the clamping nut according to the present invention, the spike has an inclined cut.

Such inclined cut, particularly in an embodiment where the clamping nut, particularly the ground positioning portion, is of tube shape, i.e. thus reflecting a pipe cut at a diagonal, advantageously allows for a relatively easy positioning of the clamping nut on the ground. The clamping nut may be positioned also on a relatively dry surface without physical exertion.

It will be immediately understood that such spike, particularly a spike with an inclined cut, is preferably arranged as a part of the ground-positioning portion of the clamping nut on the free end of the clamping nut facing away the end for attachment of the spraying device. Therefore, particularly in an embodiment where the clamping nut is of an elongate shape, in a position where the clamping nut is positioned on the ground with its free end of the clamping nut facing away the end for attachment of the spraying device, the spraying device attached to or being attached to the clamping nut will be in an upright position. Accordingly, if the spike of the clamping nut, particularly of the ground positioning portion of the clamping nut, at the free end of the clamping nut facing away the end for attachment of the spraying device is engaging into the ground, the spraying device attached to or attachable to the hose connector, can be used as a stationary sprinkling device.

Advantageously, when inserting the spike into the ground, the hose may bend elastically sideward, and thus may on the one hand output the way for insertion of the spike into the ground, on the other hand support the clamping nut on the ground. Particularly, due to the asymmetric shape of a spike having such inclined cut, the hose may bent sideways, and as a result, the spike may be pushed into the soil, while the user pulls the hose.

In a further advantageous embodiment of the clamping nut according to the present invention the clamping nut, particularly the ground-positioning portion, more particularly the tube, is made from a rigid, non-flexible material. This makes it more robust and in case the positioning on the soil requires a penetration of the soil this can be achieved easier.

Alternatively, in a further advantageous embodiment of the clamping nut according to the present invention the clamping nut, particularly the ground-positioning portion, more particularly the tube, is made from a flexible material. Which when held by the users hand might make it feel smother.

Particularly, the clamping nut, the ground-positioning portion, more particularly the tube, or a part thereof, can be made from a flexible material, for example, a deformable plastic material. Accordingly, in an embodiment the clamping nut may comprise a plastically deformable portion, e.g. a plastically deformable tube, particularly in the form of a "swan neck", which may be provided and/or attached to the hose piece.

Such portion made of a flexible material is advantageous, as it can bend through, for example, serving as a coupling aid to be used at rain barrels or such portion may be or may be part of the ground-positioning portion and serve as a flexible floor stand for spraying.

Particularly, the ground-positioning portion may be made at least partially from such flexible material. Accordingly, with the clamping nut and/or the irrigation device according to the present invention, a spraying means, such as a spray gun, can be fixed on the ground with the help of such flexible, particularly plastically deformable, ground-positioning portion, which may be in the form of a tube and, more particularly which is directly attached to the hose connector.

In a further advantageous embodiment of the clamping nut, particularly the ground-positioning portion, comprises a frame, particularly a tripod, configured to position the clamping nut on the surface.

In a further advantageous embodiment of the clamping nut according to the present invention, the clamping nut, particularly the ground positioning portion, comprises a clamping element.

Such clamping element may be advantageously provided at the lower most end of the free end of the clamping nut, particularly at the end of a spike. It is particularly advantageous in preventing an undesired unfold of the hose and/or the ground-positioning portion, particularly if provided with or as a tripod. Such clamping element may be selected from the group comprising O-ring, sleeve or a geometry in the clamping nut, particularly in the ground-positioning portion.

In a further advantageous embodiment of the clamping nut according to the present invention, the clamping nut further includes a clip attached to the clamping nut. The clip may be used to attach the irrigation device to a support structure such as a wall, a pole, or a side-wall of a rainwater storage tank etc. The support structure may be supported on a ground surface. Therefore, the clip helps the clamping nut to be positioned on the ground surface through the support structure. The clip facilitates easy attachment of the irrigation device to any such support structure. The clip may be of any suitable shape such as a partial hollow cylindrical shape, a hollow cylindrical shape, or an L-shaped structure etc.

The above described problems are also advantageously solved by an irrigation device according to claim 10. Such irrigation comprises a clamping nut according to the present invention and a hose connector for mounting a spraying device, wherein the irrigation device, particularly the clamping nut, comprises a ground-positioning portion, which is configured to be positioned to a surface, particularly a garden surface, wherein the clamping nut is directly attached to the hose connector.

It will be immediately acknowledged that any feature, effect or advantage described herein in connection with a clamping nut according to the present invention may also be a feature, effect or advantage of an irrigation device according to the present invention, and vice versa.

The irrigation device of the present invention comprises a clamping nut according to the present invention and a hose connector. Thereby it is of advantage that the clamping nut is directly attached to the hose connector. This allows for a relatively compact and relatively easy design. Particularly, the number of parts is advantageously reduced.

Moreover, the irrigation device of the present invention can be used as both, a handheld device and a stationary device. The irrigation device can be held in hand, whereby the clamping nut may also serve as a handle, particularly a mini-lance, which makes irrigation easier. In a second operation state, the irrigation device can be positioned to a surface, particularly a garden surface. For this purpose, the irrigation device of the present invention comprises the clamping nut according to the present invention, which is configured to be positioned to the surface. Particularly, the clamping nut may comprise a ground positioning portion, e.g. in the form of a spike, tube, tripod and/or flexible portion, configured to position the clamping nut on the surface.

The relatively compact design and the fact that the irrigation device consists of relatively few components is of further advantage, as for example when winding the hose, e.g. pulling the irrigation device over the surface, for example the lawn, the clamping nut, particularly a spike, is automatically cleaned of dirt residues. Moreover, the compact design ensures that the clamping nut does not engage the surface in an unwanted manner, i.e. without the risk that the clamping nut or the irrigation device interlocks or tilts on the surface.

In an advantageous embodiment of the irrigation device according to the present invention, the clamping nut and the hose connector are formed as integral parts of the irrigation device.

In connection with such configuration, where the clamping nut, particularly the spike, and the hose connector are formed as integral parts of the irrigation device it will be understood that the clamping nut the hose connector are provided as one single integral component. This advantageously allows for relatively low production costs and a relatively compact design of the irrigation device. Particularly, it is considered herein, that the clamping nut is formed as a one-part piece with the hose connector. In other words, the clamping nut is formed as an integrated part of the irrigation device. Particularly, the clamping nut and the hose connector may be formed as a one-piece injection mold.

In an embodiment of the irrigation device according to the present invention, which is also an embodiment of the clamping nut of the present invention, the ground positioning portion is formed as integral part of the clamping nut. Particularly, a spike-shaped clamping nut may be formed as an integral part of the hose connector. Accordingly, the clamping nut and the hose connector can be manufactured relatively cost-efficient.

In a further advantageous embodiment, the irrigation device of the present invention consists of a clamping nut and a hose connector, and, optionally, a spraying device, e.g. a handheld spray gun, which may be mounted on the hose connector. This particularly allows for an irrigation device manufactured of a relatively low number of parts. It will be understood that in such configuration the irrigation device consisting of a clamping nut and a hose connector, the hose and the spraying device may be easily attached to the irrigation device.

Particularly, the clamping nut is directly attached to the hose connector, whereby preferably the clamping nut and the hose connector are formed as integral parts. Thereby, the clamping nut, particularly a spike-shaped clamping nut, preferably is permanently attached to the hose connector. The spraying device can thus be kept conventionally by hand or on demand simply be positioned on the surface. In said positioning on the surface, the irrigation device may be configured either as a circle sprinkler or bush or tree irrigation device. In one possible embodiment the rotation of the circular sprinkler is be limited to its left and right site, thus it moves between these two borders.

In a further advantageous embodiment of the irrigation device according to the present invention, the clamping nut and the hose connector are formed as separate parts of the irrigation device, wherein the clamping nut is directly attachable to the hose connector.

In such embodiment, it is of further advantage if the clamping nut is attachable to the hose connector via an easy to assemble connection. Particularly, the clamping nut and the hose connector may be configured such that the clamping nut is attachable to the hose connector via a snap connection or a screw connection. In an embodiment in which the clamping nut is attachable to the hose connector via a snap connection the hose connector can be easily snap fit to the clamping nut. For such purpose, the hose connector may comprise one or more clip elements, which are configured to snap fit to one or more respectively formed receiving of the clamping nut, or vice versa.

In a further advantageous embodiment of the irrigation device according to the present invention, the clamping nut, particularly the ground positioning portion, is dimensioned and configured such that the clamping nut, particularly the ground positioning portion, is not laterally projecting over the circumference of the hose connector.

This advantageously allows for an irrigation device with a relatively slender shape. Particularly, the clamping nut, more particularly the ground-positioning portion, e.g. a spike-like portion of the clamping nut, will not project over the circumference of the hose connector. Accordingly, when pulling the irrigation device over the surface or ground, e.g. by pulling or winding up the hose, the irrigation device will not interlock or tilt on the surface. In other words, an unwanted engagement of the irrigation device with the surface is advantageously avoided.

In a further advantageous embodiment of the irrigation device according to the present invention, the hose connector comprises a water stop.

Accordingly, the spraying device, which is to be connected or disconnected with the irrigation device for the irrigation, can be connected and/or disconnected under pressure, i.e. under water supply of the hose connected to the irrigation device. Moreover, while connecting and/or disconnecting the spraying device, the irrigation device may be left positioned on the ground.

In a further advantageous embodiment of the irrigation device according to the present invention, the irrigation device comprises a spraying device for spraying water, wherein the spraying device is attachable to the hose connector, and wherein the spraying device is selected from the group comprising spraying nozzle, spray gun and sprinkler, particularly circle sprinkler.

In such embodiment, the spraying device is part of the irrigation device and configured to be attachable and/or detachable, particularly exchangeable. This particularly allows for an easy attachment, detachment and exchange of the spraying device.

In a further advantageous embodiment, the spraying device is a spray gun. This advantageously allows for an easy assembly of the irrigation device comprising such spray gun as the spraying device, as such spray gun usually has a relatively comfortable griping geometry. Particularly, the positioning on the surface, more particularly the engagement of a spike-shaped clamping nut and/or spike shaped ground positioning portion to the ground, is facilitated with a spraying device being assembled to the irrigation device, as the spraying device allows for a better handling and good force transmission. Particularly, the griping geometry of a spray gun attached to the irrigation device facilitates the assembly of the spraying device to the hose connector of the irrigation device, and additionally to engage a spike with the surface.

In a further advantageous embodiment, the hose connector includes threads such that the threads on the hose connector engage with the threads on the clamping nut to couple the hose connector with the clamping nut. This provides for easy coupling and de-coupling of the hose connector and the clamping nut for various purposes such as cleaning, attachment, detachment and exchange of the hose connector etc.

All described embodiments of the invention have the advantage, that a clamping nut or an irrigation device with such clamping nut is provided, which can be used as both a handheld device and a stationary device for irrigation. Thereby the clamping nut or the irrigation device with such clamping nut, according to the present invention provides for an irrigation device with improved functions, particularly with a more robust and a more simple design.

The present invention will be described in further detail with reference to the drawings from which further features, embodiments and advantages may be taken, and in which:
FIGs 1A, 1B and 1C illustrate a series of perspective side views of an irrigation device according to the present invention comprising a clamping nut according to the present invention showing a first inventive embodiment;
FIGs 2A and 2B illustrate perspective side views of an irrigation device according to the present invention comprising a clamping nut according to the present invention in a first operational state; and
FIGs 3A and 3B illustrate perspective side views of an irrigation device according to the present invention comprising a clamping nut according to the present invention in a second operational state.

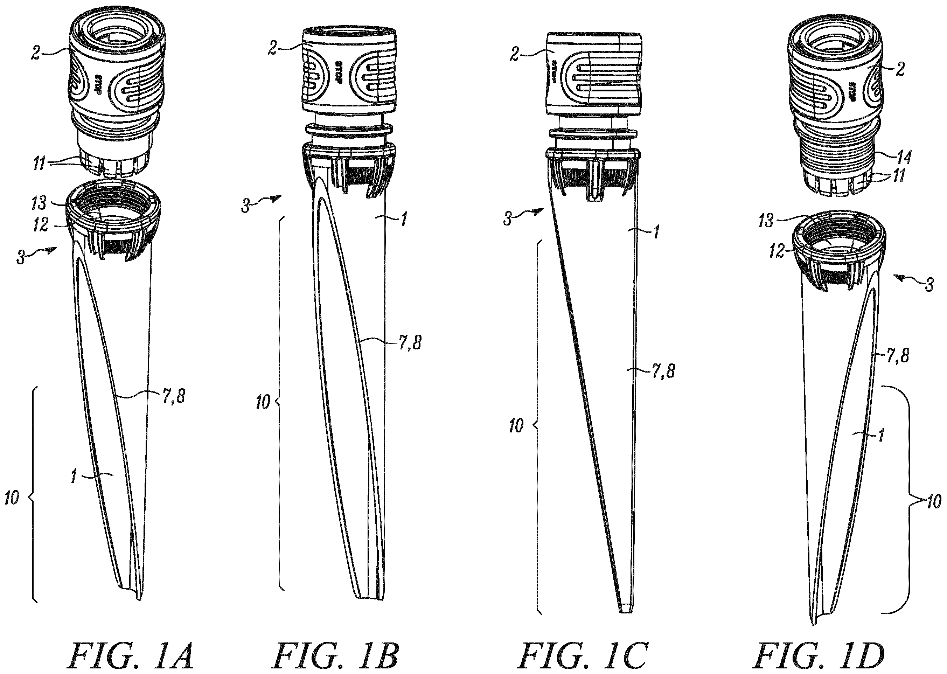

FIG 1A shows an irrigation device 3 according to the present invention, which comprises a clamping nut 1 according to the present invention and a hose connector 2 in a disassembled state.

As immediately apparent in further view of Figs. 1B and 1C, which show the irrigation device 3 of Fig. 1A in an assembled state, the clamping nut 1 and the hose connector 2 are formed as separate parts of the irrigation device 3. However, it is also immediately apparent from Figs. 1A to 1C, that the clamping nut 1 is directly attachable to the hose connector 2. More particularly, such configuration, where the clamping nut 1 and the hose connector 2 are assembled such that the clamping nut 1 is directly attached to the hose connector 2 provides a clamping nut 1 and a respective irrigation device 3 comprising such clamping nut 1, which has advantageously improved functions, particularly has a relatively robust and a relatively simple design, as may be taken particularly from Figs. 1B and 1C.

For such purpose, the clamping nut 1 is attachable to the hose connector 2 via an easy to assemble snap connection. As particularly may be taken from Fig. 1A the hose connector 2 can be easily snap fit to the clamping nut 1 via clip elements 11 provided on the hose connector 2, which are configured to snap fit to the respectively formed receiving 12 of the clamping nut 1. In the shown embodiment, the clamping nut 1 additionally comprises a thread 13, which can be alternatively used for assembling an alternative hose connector via a screw connection.

FIG. 1D illustrates another embodiment of the present disclosure. The hose connector 2 includes a thread 14 such that the thread 14 engages the thread 13 so as to couple the hose connector 2 with the clamping nut 1. It should be contemplated that that the hose connector 2 and the clamping nut 1 may be coupled to each other through any other suitable means as well.

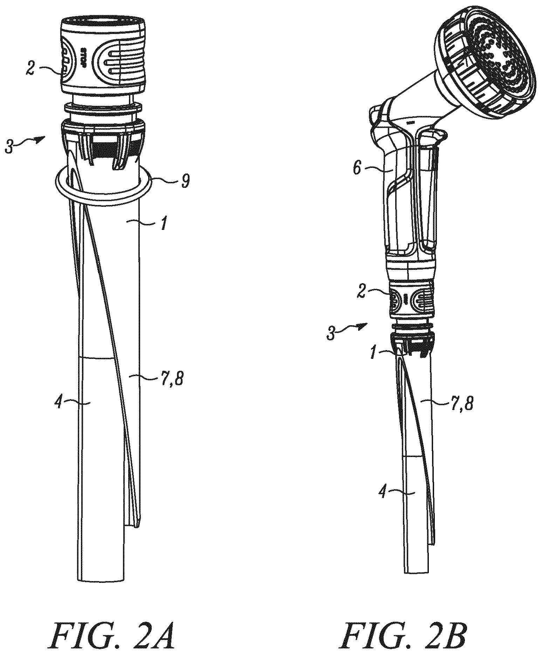

As apparent from Figs 2A and 2B the hose connector 2 is connected to a hose 4, e.g. a usual garden hose 4. In connection therewith, it is considered herein, that the hose connector 2 is dimensioned and configured to adapt a garden hose 4 with a given diameter. Advantageously, a hose connector 2 fitting to the desired hose 4 with a given diameter may be assembled to the clamping nut 1.

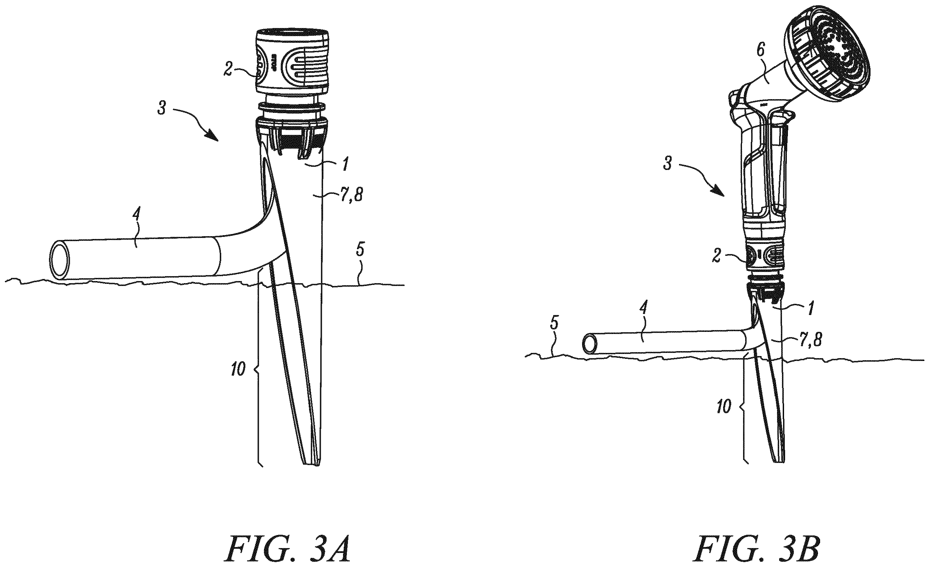

The hose connector 2 is further configured to mount a spraying device 6, particularly a handheld spraying device 6, for example a spray gun 6, as shown in Fig. 2B and Fig. 3B, which is for spraying water for the purpose of irrigation. It will however be immediately understood that also other spraying devices may be easily attached or exchanged, for example a spray gun, a sprinkler, a nozzle and/or circle sprinkler or the like. However, one of the particular advantages of the present invention is apparent from the overall view of Figs. 2A and 2B, and 3A and 3B, if a usually hand held spraying device, here a handheld spray gun, is used. FIGs 2A and 2B illustrate perspective side views of an irrigation device 3 according to the present invention comprising a clamping nut 1 according to the present invention in a first operational state where the irrigation device 3 can be held in hand.

A clamping element 9 is illustrated in FIG. 2A. The clamping element 9 may help in clamping the hose 4 with the spike 8 such that the hose 4 does not move away from the spike 8. The clamping element 9 may be selected from any one of an O-ring, a sleeve or a geometry in the clamping nut 1 etc. The clamping element 9 is provided towards the ground positioning portion of the clamping nut 1. The clamping element 9 may move downwards along the hose 4 and accordingly clamp the hose 4 and the spike 8 together as the irrigation device 3 is in use. The clamping element 9 may also move in up-wards position along the hose 4, resulting in the hose 4 and the spike 8 being no longer clamped together. In the illustrated embodiment, the clamping element 9 is shown as an O-ring in the upper position of the spike 8, thus not clamping hose 4 and spike 8 together.

FIGs 3A and 3B illustrate perspective side views of an irrigation device 3 according to the present invention comprising a clamping nut 1 according to the present invention in a second operational state, where the irrigation device is positioned on the surface 5, e.g. a garden surface 5.

Particularly, from Figs. 3A and 3B it is apparent that the clamping nut 1 comprises a ground-positioning portion 10, which is configured to position the clamping nut 1, particularly the ground-positioning portion 10, on a surface 5. Accordingly, the clamping nut 1 according to the present invention, serves for positioning the thereto-attached spraying device 6 on the surface 5. The ground-positioning portion 10 is arranged at the free end of the clamping nut 1 facing away the end to be connected to the hose connector 2 and spraying device 6.

It is also apparent from Figs. 2B and 3B, that the clamping nut 1 of the present invention allows for an easy assembly of a respective irrigation device 3 comprising such clamping nut 1, which can be used as both a handheld irrigation device 3, as shown in Figs. 2A and 2B and/or as a stationary irrigation device 3 being positioned to the ground 5, as shown in Figs. 3A and 3B.

Thereby a person skilled in the art will immediately understand, that a spraying device 6, which is to be mounted on the hose connector 2 and which connects the hose 4 with the spraying device 6 for supporting water through the hose 4 to the spraying device 6 for irrigation may thus be used as a handheld irrigation device 3 as particularly shown in Fig. 2B, and, which - if desired - can be positioned on the ground 5, as particularly shown in Fig. 3B. For example, if a user has to interrupt irrigating of a garden surface 5 with said handheld device 3 as shown in Fig. 2B, instead of that the user interrupts the irrigation or exchanges the irrigation device to a stationary device, he simply positions the clamping nut 1 and the irrigating device 3 according to the present invention on the ground 5, as particularly shown in Fig. 3B. Accordingly, it is also possible to water the surface 5 over a longer period or to continue irrigation without having to be present.

It may be also immediately seen, for example from Fig. 2B, that compared to the usual configuration of a handheld spraying device 3, i.e. a hose 4 connected to said spraying device 6 via a hose connector 2 and a clamping nut, the clamping nut 1 and the irrigation device 3 according to the present invention is cost neutral, as the usually applied clamping nut is replaceable by the clamping nut 1 according to the present invention.

As may be best seen from Figs. 2A and 2B the clamping nut 1 of the shown embodiment has an elongated shape configured such that in a state where said hose 4 is connected to said hose connector 2, and particularly, wherein the clamping nut 1 is connected to said hose connector 2, e.g. as shown in Fig. 2A and 2B, the hose 4 extends longitudinally, particularly substantially parallel, along at least a part of the elongated shaped clamping nut 1. Accordingly, the clamping nut 1, and particularly the ground-positioning portion 10 thereof may also be used as a handle extension and thus serves as a "mini-lance", as shown in Fig. 2B. Furthermore, such elongated shape is of advantage due to its relatively compact design, particularly with regard to the radial dimensions. During a winding of the hose 4, the elongated shaped clamping nut 1 and the irrigation device 3 will be pulled over the surface 5, without the risk that the clamping nut 1 or the irrigation device 3 interlocks or tilts on the surface 5.

As may be best seen from Fig. 1A in connection with Fig. 2A, the clamping nut 1 of the shown embodiment and particularly the ground-positioning portion 10 thereof is in the form of a tube 7. Therefore the hose 4 attached to the clamping nut 1 and the hose connector 2, as shown in Fig. 2A, can be arranged to pass at least partially through the inside of said tube 7, also providing a kink protection by the tube surrounding - at least partially - the hose 4. Thereby, a clamping nut 1 with a cross-section of said tube 7 can be chosen such that the tube 7 has a round, here a circular cross-section adapted to the cross-section and/or the diameter of the desired hose 4. As may be best seen from Fig. 2A the hose 4 is advantageously guided straight in the hollow of said tube 7, preventing any curling or winding of the hose 4 within the tube 7.

In the presently shown embodiment the tube shaped clamping nut 1, particularly the ground-positioning portion 10 thereof at the free end of the clamping nut 1 facing away from the hose connector 2 and the spraying device 6, has the form of a spike 8 with an inclined cut. Such spike 8 with an inclined cut advantageously facilitates the positioning on the surface 5, particularly of a loose surface, such as lawn or soil. The spike 8 can be used to penetrate the surface 5 and thus to position the clamping nut 1 and the irrigation device 3 on the surface 5, as may be best seen from Figs. 3A and 3B.

As may be taken from Figs. 3A and 3B showing an operational state where the clamping nut 1 is positioned on the ground 5 with its free end, the spraying device 6 attached to or being attached to the irrigation device 3 will be in an upright position. Accordingly, and as may be best seen from Fig. 3B, if the spike 8 of the ground positioning portion 10 of the clamping nut 1 is engaging into the ground 5, the spraying device 6 attached to the hose connector 2, can be used as a stationary sprinkling device. Furthermore, and particularly, due to the asymmetric shape of a spike 8 having an inclined cut, the hose 4 may bend elastically side wards upon insertion of the spike 8 into the ground 5 as shown in Figs. 3A and 3B. Thus, on the one hand this may output the way for insertion of the spike 8 into the ground 5, on the other hand support the clamping nut 1 on the ground 5.

This is particularly possible also with dry surfaces 5, if the clamping nut 1, and particularly the ground-positioning portion 10, is made from a rigid, non-flexible material.

As may be taken from the above, the irrigation device 3 of the present invention can be used as both, a handheld device as shown in Figs. 2A and 2B and as a stationary device as shown in Figs. 3A and 3B. In other words, the irrigation device 3 can be held in hand, whereby the clamping nut 1 may also serve as a handle, particularly a mini-lance, which makes irrigation easier. And in a second operation state as shown in Figs. 3A and 3B, the irrigation device 3 can be positioned on a surface 5, particularly a garden surface 5 with the clamping nut configured to be positioned on the surface 5.

According to the embodiment shown in Figs. 1A to 1C, the irrigation device 3 comprises a relatively compact design and relatively few components, i.e. in the present case the hose connector 2 with the ground-positioning portion 10 as an integrally formed part thereof, and the clamping nut 1. Alternatively, the hose connector 2 and the clamping nut 1 may be provided, however, as one integral irrigation device 3, reducing the number of parts to one. Particularly, the clamping nut 1 and the hose connector 2 may be formed as a one-piece injection mold. In such case the irrigation device 3 may consists of a clamping nut 1 and a hose connector 2 formed as an integral part, and, optionally, a spraying device 6, e.g. a handheld spray gun, which may be mounted on the hose connector 2.

As may be best seen from Figs. 1A and 1B the clamping nut 1, particularly the spike-shaped ground positioning portion 10, is dimensioned and configured such that the clamping nut 1, particularly the ground positioning portion 10, is not laterally projecting over the circumference of the hose connector 2, which advantageously allows for an irrigation device 3 with a relatively slender shape. Accordingly, when pulling the irrigation device over the surface or ground 5, e.g. by pulling or winding up the hose 4, the irrigation device 3 will not interlock or tilt on the surface 5. In other words, an unwanted engagement of the irrigation device 3 with the surface 5 is advantageously avoided.

Additionally, the irrigation device 3 of the present invention, particularly the hose connector 2 may comprise a water stop. Accordingly, the spraying device 6, which is to be connected or disconnected with the irrigation device 3 for the irrigation, can be connected and/or disconnected under pressure, i.e. under water supply of the hose 4 connected to the irrigation device 3.

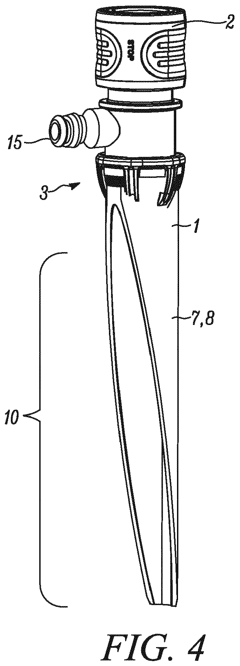

FIG. 4 illustrates another embodiment of the present invention. The hose connector 2 further includes a side coupling mechanism 15 to couple the hose 4 from a side of the hose connector 2. The side coupling mechanism 15 may include means for receiving the hose 4 such that the hose 4 is securely coupled to the hose connector 2. Further, it should be contemplated that the side coupling mechanism 15 shown in the FIG. 4 is for illustrative purposes only, and the side coupling mechanism 15 may be any other type of coupling mechanism as well which may allow the hose 4 to be coupled to the hose connector 2 from a side of the hose connector 2.

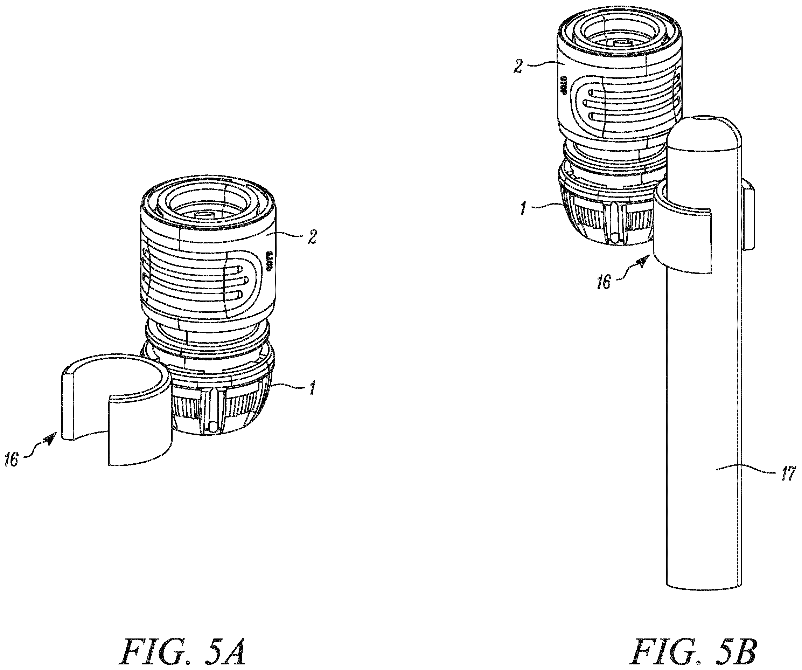

FIG. 5A and 5B illustrate another embodiment of the present invention. A clip 16 is attached to the clamping nut 1. The clip 16 may be used to mount the irrigation device 3 through the clamping nut 1 to a support structure 17 with the handle of a tool placed on the surface 5 as shown in FIG. 5B. The support structure 17 may be any type of a support structure such as a handle, a wall, a sidewall of a rain-water tank or any other type of support structure as well as per application requirements. The support structure 17 is supported on the surface 5. Therefore, the clip 16 supports the clamping nut on the surface 5 through the support structure 17. In an embodiment, the surface 5 is a surface of a garden, or a lawn or any other such exemplary surface which may be suitable as per the need of the present disclosure.

The clip 16 is illustrated as having a partial hollow cylindrical structure. The clip 16 is also illustrated as having a circular cross-sectional structure. Preferably, the clip 16 is flexible, and of a cross-section equal to or less than the support structure 17, to further facilitate its fixation on the support structure 17. It should be contemplated that the clip 16 may have any shape or cross-sectional structure which may be suitable as per the application requirements. The clip 16 may be coupled to the clamping nut 1 through any suitable joining means such as welding, soldering, adhesive means etc. which may be suitable as per the need of the application for which the irrigation device 3 is being used. The clip 16 may also be manufactured as an integral part of the clamping nut 1.

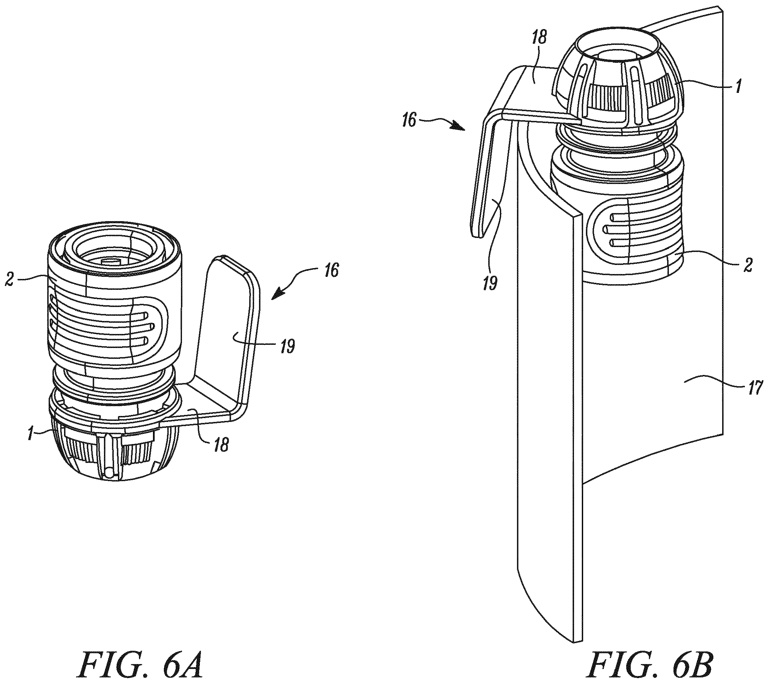

FIG. 6A and 6B illustrate another embodiment of the present invention. Referring to FIG. 6A, the clip 16 is illustrated as having an L-shaped structure. The clip 16 includes a first end 18 and a second end 19. The clip 16 is coupled to the clamping nut 1 at the first end 18 of the clip 16. The first end 18 of the clip 16 may be coupled to the clamping nut 1 through any suitable joining mechanism which may be suitable as per application requirements. For example, the first end 18 of the clip 16 may be coupled to the clamping nut 1 through welding, soldering, adhesive means etc. FIG. 6B illustrates the hose connector 2 and the clamping nut 1 attached to the support structure 17 through the clip 16. The clip 16 may be used to hang the irrigation device 3 from the support structure 17. In the illustrated embodiment, the support structure 17 is shown as a rainwater storage tank. As the clip 16 facilitates easy attachment of the irrigation device 3 to the support structure 17, various applications may be performed through the irrigation device 3. It is obvious for the one skilled in the art that the clip 16 could have any other shape, for example the shape of a flexible tripod that can be manipulated or bent to be fixed to any support structure 17.

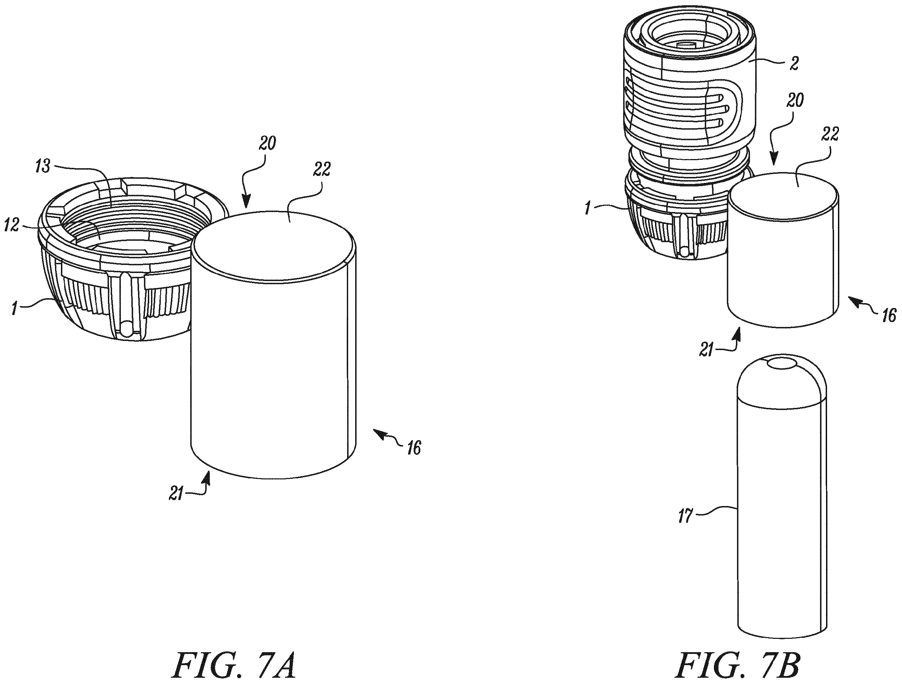

FIG. 7A and 7B illustrate another embodiment of the present disclosure. FIG. 7A shows the clip 16 having a hollow cylindrical shape. The clip has a first end 20 and a second end 21. The first end 20 includes a cover 22 attached to the clip 16 at the first end 20. The clip 16 may be used to mount the irrigation device 3 to the support structure 17 as shown in FIG. 7B. The support structure 17 is shown as a pole etc. which may be mounted on the surface 5. The second end 21 of the clip 16 is received by the support structure 17 as the clip 16 has a hollow cylindrical type structure. The cover 22 enables the coupling of the clip 16 to the support structure 17 as the cover 22 covers the hollow cylindrical shape at the second end 21 of the clip 16. It is obvious for the one skilled in the art that especially in case the clip 16 would exhibit cross-section equal to the support structure 17 the clip 16 is mounted to, the cover 22 may not be required at all.

With combined reference to FIG. 5, 6 and 7, the clip may have any suitable shape based on the application requirements. The embodiment discussed through the FIGS. 5-7 are merely exemplary in nature and do not limit the scope of the present disclosure in any manner.

The features of the present invention disclosed in the specification, the claims, and/or the figures may both separately and in any combination thereof be material for realizing the invention in various forms thereof.

### List of reference numerals

- 1: clamping nut
- 2: hose connector
- 3: Irrigation device
- 4: hose
- 5: surface
- 6: spraying device
- 7: tube
- 8: spike
- 9: clamping element
- 10: ground positioning portion
- 11: clip elements
- 12: receiving
- 13: thread
- 14: thread
- 15: side coupling mechanism
- 16: clip
- 17: support structure
- 18: first end
- 19: second end
- 20: first end
- 21: second end
- 22: cover

## Claims

1. A clamping nut (1) for connecting a hose (4) to a hose connector (2) for mounting a spraying device (6), wherein the clamping nut (1) comprises a ground positioning portion (10) con-figured to position the clamping nut (1) on a surface (5), particularly a garden surface (5), wherein the clamping nut (1) is directly attachable to the hose connector (2),
**characterized in that**
the clamping nut (1) has an elongated shape configured such that in a state where said hose (4) is connected to said hose connector (2), said hose (4) extends longitudinally, particularly substantially parallel, along at least a part of the ground positioning portion (10) of the elongated shaped clamping nut (1).

2. The clamping nut (1) according to claim 1, wherein the ground positioning portion (10) configured to position the clamping nut (1) on a support structure (17) that itself is supported on the ground.

3. The clamping nut (1) according to any one of claims 1 to 2, wherein the clamping nut (1), particularly the ground-positioning portion (10), is in the form of a tube (7).

4. The clamping nut (1) according to any one of claims 1 to 3, wherein the clamping nut (1), particularly the ground positioning portion (10), more particularly the tube (7), has the form of a spike (8).

5. The clamping nut (1) according to any one of claims 1 to 4, wherein the clamping nut (1), particularly the ground positioning portion (10), more particularly the tube (7), is made from a rigid material.

6. The clamping nut (1) according to any one of claims 1 to 4, wherein the clamping nut (1), particularly the ground positioning portion (10), more particularly the tube (7), is made from a flexible material.

7. The clamping nut (1) according to any one of claims 1 to 6, wherein the clamping nut (1), particularly the ground-positioning portion (10), comprises a tripod configured to position the clamping nut (1) on the surface (5).

8. The clamping nut (1) according to any one of claims 1 to 7, wherein the clamping nut (1), particularly the ground-positioning portion (10), comprises a clamping element (9).

9. The clamping nut (1) according to any one of the claims 1 to 8, wherein the clamping nut (1) further comprises a clip (16) attached to the clamping nut (1).

10. Irrigation device (3) comprising a clamping nut (1) according to any one of the preceding claims and a hose connector (2) for mounting a spraying device (6), wherein the irrigation device (3), particularly the clamping nut (1) comprises a ground positioning portion (10), which is configured to be positioned to a surface (5), particularly a garden surface (5), wherein the clamping nut (1) is directly attached to the hose connector (2).

11. The irrigation device (3) according to claim 10, wherein the clamping nut (1) and the hose connector (2) are formed as integral parts of the irrigation device (3).

12. The irrigation device (3) according to claim 10, wherein the clamping nut (1) and the hose connector (2) are formed as separate parts of the irrigation device (3), wherein the clamping nut (1) is directly attachable to the hose connector (2).

13. The irrigation device (3) according to any one of claims 10 to 12, wherein the clamping nut (1), particularly the ground-positioning portion (10), is dimensioned and configured such that the clamping nut (1), particularly the ground positioning portion (10), is not laterally projecting over the circumference of the hose connector (2).

14. The irrigation device (3) according to any one of claims 10 to 13, further comprising a spraying device (6) for spraying water, wherein the spraying device (6) is attachable to the hose connector (2), and wherein the spraying device (6) is selected from the group comprising spraying nozzle, spray gun and sprinkler, particularly circle sprinkler.

15. The irrigation device (3) according to any one of claims 10 to 14, wherein the hose connector (1) includes threads (14), such that the threads (14) engage with the threads (13) on the clamping nut (2) to couple the hose connector (1) with the clamping nut (2).

## Patentansprüche

1. Klemmmutter (1) zum Verbinden eines Schlauchs (4) mit einem Schlauchverbinder (2) zum Anbringen einer Sprühvorrichtung (6), wobei die Klemmmutter (1) einen Bodenpositionierungsabschnitt (10) umfasst, der so ausgebildet ist, dass er die Klemmmutter (1) auf einer Fläche (5), insbesondere einer Gartenfläche (5), positioniert, wobei die Klemmmutter (1) direkt an dem Schlauchverbinder (2) anbringbar ist,
**dadurch gekennzeichnet, dass**
die Klemmmutter (1) eine längliche Form hat, die so ausgebildet ist, dass in einem Zustand, in dem der Schlauch (4) mit dem Schlauchverbinder (2) verbunden ist, sich der Schlauch (4) in Längsrichtung, insbesondere im Wesentlichen parallel, entlang mindestens eines Teils des Bodenpositionierungsabschnitts (10) der länglich geformten Klemmmutter (1) erstreckt.

2. Klemmmutter (1) nach Anspruch 1, wobei der Bodenpositionierungsabschnitt (10) ausgelegt ist, um die Klemmmutter (1) auf einer Stützstruktur (17) zu positionieren, die selbst auf dem Boden abgestützt ist.

3. Klemmmutter (1) nach einem der Ansprüche 1 bis 2, wobei die Klemmmutter (1), insbesondere der Bodenpositionierungsabschnitt (10), die Form eines Rohres (7) hat.

4. Klemmmutter (1) nach einem der Ansprüche 1 bis 3, wobei die Klemmmutter (1), insbesondere der Bodenpositionierungsabschnitt (10), insbesondere das Rohr (7), die Form eines Dornes (8) hat.

5. Klemmmutter (1) nach einem der Ansprüche 1 bis 4, wobei die Klemmmutter (1), insbesondere der Bodenpositionierungsabschnitt (10), insbesondere das Rohr (7), aus einem starren Material hergestellt ist.

6. Klemmmutter (1) nach einem der Ansprüche 1 bis 4, wobei die Klemmmutter (1), insbesondere der Bodenpositionierungsabschnitt (10), insbesondere das Rohr (7), aus einem flexiblen Material hergestellt ist.

7. Klemmmutter (1) nach einem der Ansprüche 1 bis 6, wobei die Klemmmutter (1), insbesondere der Bodenpositionierungsabschnitt (10), ein Dreibein umfasst, das so ausgelegt ist, dass es die Klemmmutter (1) auf der Oberfläche (5) positioniert.

8. Klemmmutter (1) nach einem der Ansprüche 1 bis 7, wobei die Klemmmutter (1), insbesondere der Bodenpositionierungsabschnitt (10), ein Klemmelement (9) umfasst.

9. Klemmmutter (1) nach einem der Ansprüche 1 bis 8, wobei die Klemmmutter (1) ferner einen Clip (16) umfasst, der an der Klemmmutter (1) befestigt ist.

10. Bewässerungsvorrichtung (3) umfassend eine Klemmmutter (1) nach einem der vorhergehenden Ansprüche und einen Schlauchverbinder (2) zum Anbringen einer Sprühvorrichtung (6), wobei die Bewässerungsvorrichtung (3), insbesondere die Klemmmutter (1), einen Bodenpositionierungsabschnitt (10) umfasst, der so ausgelegt ist, dass er auf einer Fläche (5), insbesondere einer Gartenfläche (5), positioniert werden kann, wobei die Klemmmutter (1) direkt an dem Schlauchverbinder (2) befestigt ist.

11. Bewässerungsvorrichtung (3) nach Anspruch 10, wobei die Klemmmutter (1) und der Schlauchverbinder (2) als integrale Teile der Bewässerungsvorrichtung (3) ausgebildet sind.

12. Bewässerungsvorrichtung (3) nach Anspruch 10, wobei die Klemmmutter (1) und der Schlauchverbinder (2) als separate Teile der Bewässerungsvorrichtung (3) ausgebildet sind, wobei die Klemmmutter (1) direkt an den Schlauchverbinder (2) anbringbar ist.

13. Bewässerungsvorrichtung (3) nach einem der Ansprüche 10 bis 12, wobei die Klemmmutter (1), insbesondere der Bodenpositionierungsabschnitt (10), so dimensioniert und ausgebildet ist, dass die Klemmmutter (1), insbesondere der Bodenpositionierungsabschnitt (10), nicht lateral über den Umfang des Schlauchverbinders (2) vorsteht.

14. Bewässerungsvorrichtung (3) nach einem der Ansprüche 10 bis 13, ferner umfassend eine Sprühvorrichtung (6) zum Versprühen von Wasser, wobei die Sprühvorrichtung (6) an dem Schlauchverbinder (2) anbringbar ist, und wobei die Sprühvorrichtung (6) aus der Gruppe bestehend aus Sprühdüse, Sprühpistole und Sprinkler, insbesondere Kreisregner, ausgewählt ist.

15. Bewässerungsvorrichtung (3) nach einem der Ansprüche 10 bis 14, wobei der Schlauchverbinder (1) Gewinde (14) aufweist, so dass die Gewinde (14) mit den Gewinden (13) an der Klemmmutter (2) in Eingriff stehen, um den Schlauchverbinder (1) mit der Klemmmutter (2) zu verbinden.

## Revendications

1. Écrou de serrage (1) pour relier un tuyau (4) à un raccord de tuyau (2) pour monter un dispositif de pulvérisation (6), dans lequel l'écrou de serrage (1) comprend une partie de positionnement au sol (10) configurée pour positionner l'écrou de serrage (1) sur une surface (5), en particulier une surface de jardin (5), dans laquelle l'écrou de serrage (1) est directement attachable au raccord de tuyau (2), **caractérisé en ce que** l'écrou de serrage (1) a une forme allongée configurée de manière à ce que, dans un état où ledit tuyau (4) est relié audit raccord de tuyau (2), ledit tuyau (4) s'étende de façon longitudinale, en particulier sensiblement de façon parallèle, le long au moins d'une section de la partie de positionnement au sol (10) de l'écrou de serrage (1) de forme allongée.

2. Écrou de serrage (1) selon la revendication 1, dans lequel la partie de positionnement au sol (10) configurée pour positionner l'écrou de serrage (1) sur une structure de support (17) qui est elle-même supportée au niveau du sol.

3. Écrou de serrage (1) selon l'une quelconque des revendications 1 à 2, dans lequel l'écrou de serrage (1), en particulier la partie de positionnement au sol (10), est de forme tubulaire (7).

4. Écrou de serrage (1) selon l'une quelconque des revendications 1 à 3, dans lequel l'écrou de serrage (1), en particulier la partie de positionnement au sol (10), plus particulièrement le tube (7), est sous forme de piquet (8).

5. Écrou de serrage (1) selon l'une quelconque des revendications 1 à 4, dans lequel l'écrou de serrage (1), en particulier la partie de positionnement au sol (10), plus particulièrement le tube (7), est réalisé à partir d'un matériau rigide.

6. Écrou de serrage (1) selon l'une quelconque des revendications 1 à 4, dans lequel l'écrou de serrage (1), en particulier la partie de positionnement au sol (10), plus particulièrement le tube (7), est réalisé à partir d'un matériau flexible.

7. Écrou de serrage (1) selon l'une quelconque des revendications 1 à 6, dans lequel l'écrou de serrage (1), en particulier la partie de positionnement au sol (10), comprend un trépied configuré pour positionner l'écrou de serrage (1) sur la surface (5).

8. Écrou de serrage (1) selon l'une quelconque des revendications 1 à 7, dans lequel l'écrou de serrage (1), en particulier la partie de positionnement au sol (10), comprend un élément de serrage (9).

9. Écrou de serrage (1) selon l'une quelconque des revendications 1 à 8, dans lequel l'écrou de serrage (1) comprend en outre un clip (16) attaché à l'écrou de serrage (1).

10. Dispositif d'irrigation (3) comprenant un écrou de serrage (1) selon l'une quelconque des revendications précédentes et un raccord de tuyau (2) pour monter un dispositif de pulvérisation (6), dans lequel le dispositif d'irrigation (3), en particulier l'écrou de serrage (1), comprend une partie de positionnement au sol (10), qui est configurée pour être positionnée sur une surface (5), en particulier une surface de jardin (5), dans laquelle l'écrou de serrage (1) est directement attaché au raccord de tuyau (2).

11. Dispositif d'irrigation (3) selon la revendication 10, dans lequel l'écrou de serrage (1) et le raccord de tuyau (2) sont formés comme parties intégrantes du dispositif d'irrigation (3).

12. Dispositif d'irrigation (3) selon la revendication 10, dans lequel l'écrou de serrage (1) et le raccord de tuyau (2) sont formés comme parties séparées du dispositif d'irrigation (3), dans lequel l'écrou de serrage (1) est directement attachable au raccord de tuyau (2).

13. Dispositif d'irrigation (3) selon l'une quelconque des revendications 10 à 12, dans lequel l'écrou de serrage (1), en particulier la partie de positionnement au sol (10), est dimensionné et configuré de sorte que l'écrou de serrage (1), en particulier la partie de positionnement au sol (10), ne fasse pas latéralement saillie sur la circonférence du raccord de tuyau (2).

14. Dispositif d'irrigation (3) selon l'une quelconque des revendications 10 à 13, comprenant en outre un dispositif de pulvérisation (6) pour pulvériser de l'eau, dans lequel le dispositif de pulvérisation (6) est attachable au raccord de tuyau (2), et dans lequel le dispositif de pulvérisation (6) est sélectionné parmi le groupe comprenant une buse de pulvérisation, un pistolet pulvérisateur et un asperseur, en particulier un asperseur rotatif.

15. Dispositif d'irrigation (3) selon l'une quelconque des revendications 10 à 14, dans lequel le raccord de tuyau (2) inclut des filetages (14), de sorte que les filetages (14) se mettent en prise avec les filetages (13) sur l'écrou de serrage (1) pour coupler le raccord de tuyau (2) à l'écrou de serrage (1).
